# EUROPEAN PATENT APPLICATION

(11) **EP 4 738 539 A1**
(43) Date of publication of application: **06.05.2026**
(21) Application number: 24210888.4
(22) Date of filing: 05.11.2024
(51) Int. Cl.: H01M 10/643, H01M 50/213, H01M 50/242, H01M 50/264, H01M 10/6555, H01M 50/367

(54) **A BATTERY PACK AND A VEHICLE**

(71) Applicant: Volvo Truck Corporation, 405 08 Göteborg (SE)
(72) Inventor: Rout, Dhirendra, 422 54 Göteborg (SE); Irannezhad, Mike, 413 30 Göteborg (SE); Jonsson, Kasper, 417 57 Göteborg (SE)
(74) Representative: Kransell & Wennborg KB

(57) **Abstract**

The disclosure relates to a battery pack (1), wherein the battery pack (1) comprises a plurality of battery layers (11-14) arranged on top of each other in the height direction (H), and wherein each battery layer (11-14) of at least two adjacent battery layers of the plurality of battery layers (11-14) comprises:
- a plurality of battery cells (2) arranged in battery cell rows,
- a base plate member (4) with a support surface (41), and
- a frame arrangement (5) mechanically connected to the base plate member (4). The disclosure also relates to a vehicle comprising a battery pack (1).

## Description

### TECHNICAL FIELD

The disclosure relates generally to energy storage systems. In particular aspects, the disclosure relates to a battery pack and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery pack typically comprises a plurality of battery cells, i.e., electrochemical battery cells, which are electrically connected in series and/or in parallel. The battery pack may comprise one or more separate battery cell stacks, or battery modules. The battery cells may be cylindrical battery cells.

Due to the electrification trend, such as for vehicles, there is an ongoing strive to develop improved technology relating to battery packs, such as to provide cost-effective configurations which are reliable, robust and/or space efficient.

### SUMMARY

According to a first aspect of the disclosure, a battery pack is provided. The battery pack has a longitudinal extension in a longitudinal direction, a width extension in a width direction and a height extension in a height direction. The battery pack comprises a plurality of battery layers arranged on top of each other in the height direction, and each battery layer of at least two adjacent battery layers of the plurality of battery layers comprises:
- a plurality of battery cells arranged in battery cell rows which extend in the longitudinal direction from a first outer end of the battery cell rows to a second outer end of the battery cell rows,
- a base plate member with a support surface facing upwardly in the height direction, wherein the plurality of battery cells is supported by the support surface,
- a frame arrangement mechanically connected to the base plate member, wherein the frame arrangement encloses the plurality of battery cells, as seen in a sectional plane which is perpendicular to the height direction, and wherein the frame arrangement and the battery cell rows are adapted such that a side space is formed which extends in the longitudinal direction from the first outer end of the battery cell rows to a first side wall of the frame arrangement, and
wherein the at least two adjacent battery layers of the plurality of battery layers are configured such that the side spaces together form a common open side space which extends in the height direction between the battery layers. The first aspect of the disclosure may seek to provide a cost-effective battery pack configuration which is reliable, robust and/or space efficient. A technical benefit may include that by configuring the battery pack with a common open side space which is enclosed by the frame arrangements, the battery cells will be well protected while also ensuring improved packaging of the battery cells in a space-efficient manner.

Optionally in some examples, including in at least one preferred example, the plurality of battery cells of each battery layer of the at least two adjacent battery layers of the plurality of battery layers are arranged in parallel battery cell rows which extend in the longitudinal direction from the first outer end of the battery cell rows to the second outer end of the battery cell rows. A technical benefit may include improved packaging of the battery cells in the longitudinal direction. In some examples, including in at least one preferred example, the plurality of battery cells of each battery layer of the at least two adjacent battery layers of the plurality of battery layers are arranged in parallel battery cell rows which extend in the width direction, and wherein the battery cell rows are arranged one after the other in the longitudinal direction from the first outer end of the battery cell rows to the second outer end of the battery cell rows.

Optionally in some examples, including in at least one preferred example, the plurality of battery cells are cylindrical battery cells. A technical benefit may include improved packaging of cylindrical battery cells in a space-efficient manner.

Optionally in some examples, including in at least one preferred example, for each battery layer of the at least two adjacent battery layers, the side space further extends in the width direction between a first longitudinally extending wall and a second longitudinally extending wall of the frame arrangement. A technical benefit may include that the battery cells at the first outer end are more easily accessible from the common open side space. A technical benefit may additionally or alternatively include that a larger common open side space is provided, e.g., resulting in more available space for auxiliary components.

Optionally in some examples, including in at least one preferred example, at least one battery layer of the at least two adjacent battery layers further comprises at least one cooling member with a coolant path for coolant, wherein the at least one cooling member extends in the longitudinal direction and is provided in-between two adjacent battery cell rows. A technical benefit may include improved cooling of the battery cells in a space-efficient manner.

Optionally in some examples, including in at least one preferred example, at least one battery layer of the at least two adjacent battery layers further comprises a cooling manifold fluidly connected to the at least one cooling member, wherein the cooling manifold is provided in the side space between the first outer end of the battery cell rows and the first side wall. A technical benefit may include that the side space may be used for providing coolant conduits to/from the at least one cooling member. This may also result in more options for routing coolant conduits in the common open side space, e.g., by allowing the coolant conduits to extend in the common open side space between adjacent battery layers.

Optionally in some examples, including in at least one preferred example, the cooling manifold is provided in the side space such that the cooling manifold is closer to the first outer end of the battery cell rows than to the first side wall. A technical benefit may include that more space for auxiliary components is made available in the common open side space. For example, more space for coolant conduits, electric cables, etc. may be made available.

Optionally in some examples, including in at least one preferred example, the at least one cooling member is a cooling member with a repeated wave shape extending in the longitudinal direction. A technical benefit may include space-efficient packaging and improved cooling of the battery cells. In some examples, the at least one cooling member is a snake cooling member with an extension in the longitudinal direction.

Optionally in some examples, including in at least one preferred example, the battery pack further comprises at least one elongated media for providing a fluid or electric connection with at least one battery layer, wherein the at least one elongated media is provided in the common open side space, and wherein the at least one elongated media extends in the common open side space between the side spaces of the at least two adjacent battery layers. A technical benefit may include improved packaging and routing of the elongated media in the battery pack. This may result in a more space-efficient packaging.

Optionally in some examples, including in at least one preferred example, the at least one elongated media is any one of one or more electric cables, one or more data communication cables, one or more coolant conduits, or one or more venting conduits. A technical benefit may include improved packaging and routing of the one or more electric cables, the one or more data communication cables, the one or more coolant conduits, and/or the one or more venting conduits.

Optionally in some examples, including in at least one preferred example, the at least one elongated media is mechanically connected to a portion of one of the battery layers such that a fluid or electric connection of the at least one elongated media is achieved with the battery layer, and the at least one elongated media is routed such that it extends out through an opening of the battery pack which is provided in another battery layer. A technical benefit may include improved routing of the elongated media in the battery pack, e.g., such that the number of openings of the battery pack are reduced and/or such that the opening is provided in a more favorable location.

Optionally in some examples, including in at least one preferred example, for at least one battery layer of the at least two adjacent battery layers, the first side wall of the frame arrangement comprises a removably attached lid for closing and giving access to the side space. A technical benefit may include that servicing of the battery pack is facilitated, e.g., by also giving access to components in adjacent side spaces of the common open side space.

Optionally in some examples, including in at least one preferred example, the battery pack is configured such that the at least two adjacent battery layers are mechanically connected to each other via the frame arrangements of the two adjacent battery layers. A technical benefit may include a reliable and robust attachment of the adjacent battery layers.

Optionally in some examples, including in at least one preferred example, the frame arrangements of the at least two adjacent battery layers are mechanically connected to each other by one or more fasteners. A technical benefit may include a reliable and robust attachment of the adjacent battery layers.

Optionally in some examples, including in at least one preferred example, at least one fastener of the one or more fasteners is provided in complementary holes of the frame arrangements of the at least two adjacent battery layers, wherein one of the complementary holes in one of the frame arrangements has a fastener opening which is accessible from a side face of the frame arrangement which is directed away from the frame arrangement in the width direction or the longitudinal direction. A technical benefit may include facilitated manufacturing of the battery pack. A technical benefit may additionally or alternatively include that a more space-efficient frame arrangement is achieved.

Optionally in some examples, including in at least one preferred example, the fastener opening is provided in a recess on the side face. A technical benefit may include facilitated manufacturing of the battery pack. A technical benefit may additionally or alternatively include that a more space-efficient frame arrangement is achieved.

Optionally in some examples, including in at least one preferred example, the base plate member comprises an integrated venting conduit with at least one first venting opening on the support surface for at least one battery cell and with at least one second venting opening which is provided at the side space. A technical benefit may include improved venting of the battery cells, by also utilizing the common open side space for venting of the battery cells.

Optionally in some examples, including in at least one preferred example, the plurality of battery cells are oriented such that electrical terminals thereof are facing upwardly in the height direction. A technical benefit may include improved packaging of the battery cells.

Optionally in some examples, including in at least one preferred example, for each battery layer of the at least two adjacent battery layers, the frame arrangement comprises a second side wall which is provided on an opposite side of the frame arrangement with respect to the first side wall, wherein the second side wall defines the second outer end of the battery cell rows. A technical benefit may include a compact packaging of the battery cells, e.g., without a need of any side space on the other side of the frame arrangement.

Optionally in some examples, including in at least one preferred example, for each battery layer of the at least two adjacent battery layers, the frame arrangement comprises a first longitudinally extending wall and a second longitudinally extending wall which are offset from each other in the width direction, and which mechanically connects the first and second side walls to each other, wherein the first and second longitudinally extending walls define outer lateral ends of the outermost battery cell rows. A technical benefit may include a compact packaging of the battery cells, e.g., without a need of any side spaces at the longitudinal sides of the frame arrangement.

Optionally in some examples, including in at least one preferred example, for the at least two adjacent battery layers, a sealing gasket is provided between the frame arrangements such that a fluid tight connection is provided in the connection between the frame arrangements. A technical benefit may include a reliable and robust battery pack configuration.

According to a second aspect of the disclosure, a vehicle is provided. The vehicle comprises a battery pack according to any one of the examples of the first aspect of the disclosure. Advantages and benefits of the second aspect of the disclosure are analogous to the advantages and benefits of the first aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2** is an exemplary battery pack according to an example.
**FIGS. 3a****-c** are exemplary battery layers of a battery pack according to an example.
**FIG. 4** is an exemplary battery pack according to an example.
**FIG. 5** is an exemplary battery pack according to an example.
**FIG. 6** is an exemplary battery pack according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to provide a battery pack which is robust, reliable, cost-effective and/or space efficient. Additionally, an aim of the present disclosure is to provide an improved battery pack and/or vehicle, which at least partly alleviate one or more drawbacks of the prior art, or which at least are suitable alternatives. For example, by providing a battery pack configuration as disclosed herein, with a common open side space, the battery cells will be well protected while also ensuring improved packaging of the battery cells in a space-efficient manner. The common open side space may facilitate and make room for auxiliary components. For example, routing of elongated media as disclosed herein may be facilitated.

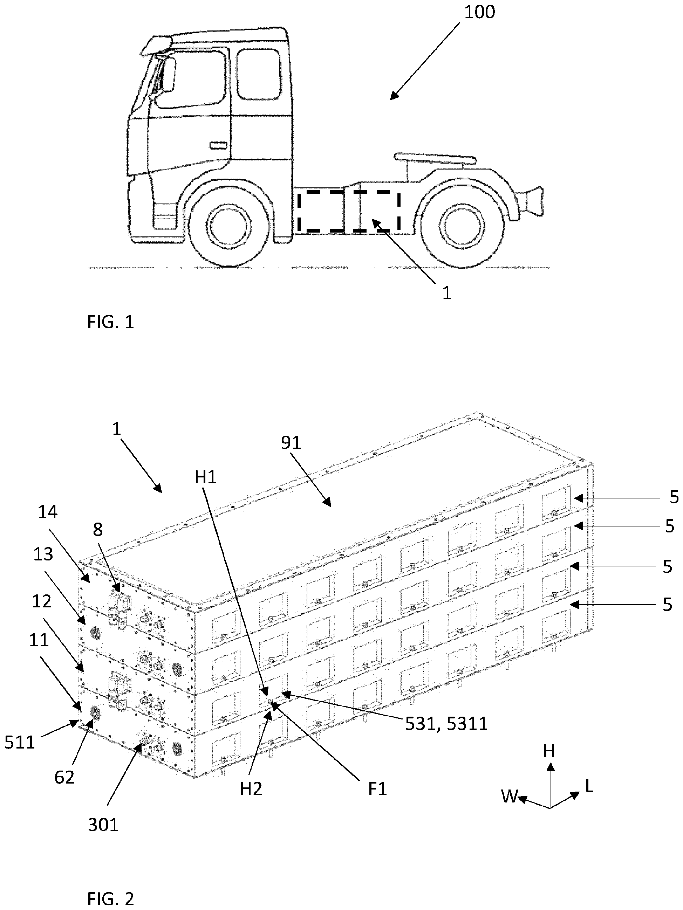

**FIG. 1** is an exemplary vehicle 100 in a side view according to an example. The vehicle 100 is in this example a truck, and more particularly a towing truck for towing one or more trailers (not shown). It shall however be noted that the vehicle may be any other type of vehicle, such as another type of truck, a bus, a passenger car, a marine vessel, or construction equipment, such as a wheel loader or an excavator. The vehicle 100 comprises a battery pack 1 according to an example disclosed herein. The battery pack 1 may at least partly be used for driving one or more electric motors (not shown) of the vehicle 100. The vehicle 100 may accordingly be an electric vehicle or a hybrid vehicle, i.e., a vehicle which at least partly uses electric power for propulsion. The battery pack 1 as disclosed herein may also be used in a stationary unit, such as a building and/or any stationary machinery.

**FIG. 2** is an exemplary battery pack 1 in a perspective view according to an example. The battery pack 1 in FIG. 2 may for example be used in the vehicle 100 shown in FIG. 1.

The battery pack 1 has a longitudinal extension along a longitudinal direction L, a width extension along a width direction W and a height extension along a height direction H. The three directions are perpendicular to each other. The directions L, W, and H may correspond to a Cartesian coordinate system. In some examples, the height direction H may correspond to a height direction of the vehicle 100 when the battery pack 1 is provided in the vehicle 100. However, it shall be noted that the battery pack 1 may also be oriented differently in the vehicle 100, or in any other stationary unit.

The battery pack 1 comprises a plurality of battery layers 11, 12, 13, 14 arranged on top of each other in the height direction H. Each battery layer 11-14 comprises a frame arrangement 5, wherein each frame arrangement 5 encloses a plurality of battery cells 2 (not shown).

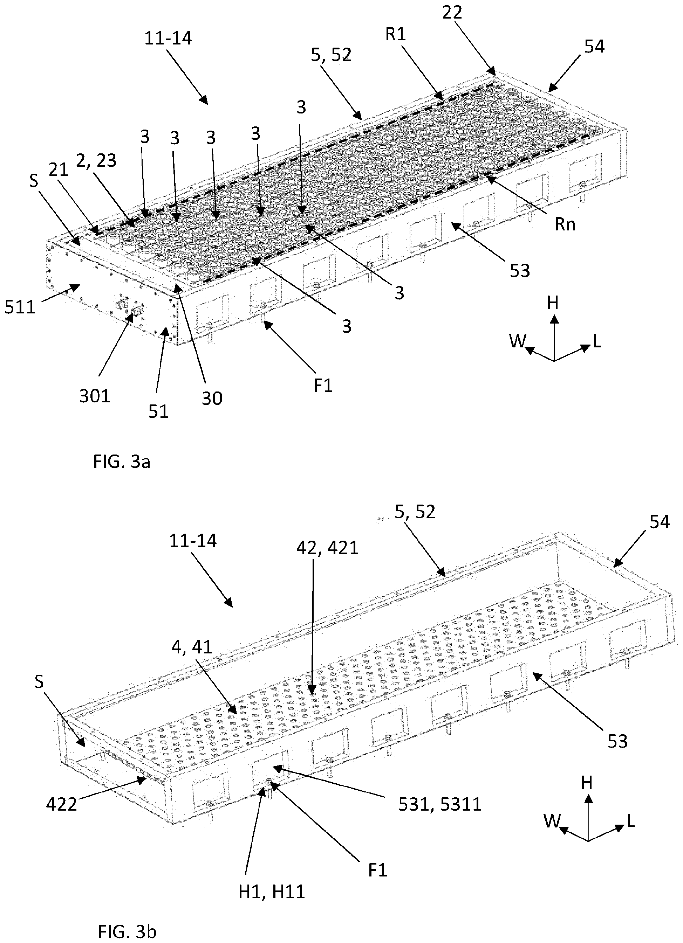

**FIGS. 3a****-c** depict examples of a battery layer 11-14 in perspective views. The battery layer 11-14 in FIGS. 3a-c may for example be a layer 11-14 as shown in FIG. 2.

With reference to e.g. FIGS. 3a, each battery layer 11-14 of at least two adjacent battery layers of the plurality of battery layers 11-14 comprises a plurality of battery cells 2 arranged in battery cell rows R1-Rn (two of the rows indicated by dashed longitudinal lines) which extend in the longitudinal direction L from a first outer end 21 of the battery cell rows R1-Rn to a second outer end 22 of the battery cell rows R1-Rn. The battery cell rows R1-Rn are in this example parallel rows extending in the longitudinal direction L. In other examples, the rows may be parallel and extending in the width direction W, and arranged one after the other in the longitudinal direction L.

As depicted in e.g. FIG. 3a, the battery cells 2 may be cylindrical battery cells, with electrical terminals 23 facing upwardly in the height direction H.

FIG. 3b depicts a battery layer without any battery cells 2 present, i.e., in a preassembled state. With reference to e.g. FIGS. 3a-b, each battery layer 11-14 of at least two adjacent battery layers of the plurality of battery layers 11-14 further comprises a base plate member 4 with a support surface 41 facing upwardly in the height direction H, wherein the plurality of battery cells 2 is supported by the support surface 41. Also, the frame arrangement 5 is mechanically connected to the base plate member 4, and the frame arrangement 5 encloses the plurality of battery cells 2, as seen in a sectional plane which is perpendicular to the height direction H. The frame arrangement 5 and the battery cell rows R1-Rn are adapted such that a side space S is formed which extends in the longitudinal direction L from the first outer end 21 of the battery cell rows to a first side wall 51 of the frame arrangement 5. In the shown example, the side space S further extends in the width direction W between a first longitudinally extending wall 52 and a second longitudinally extending wall 53 of the frame arrangement 5.

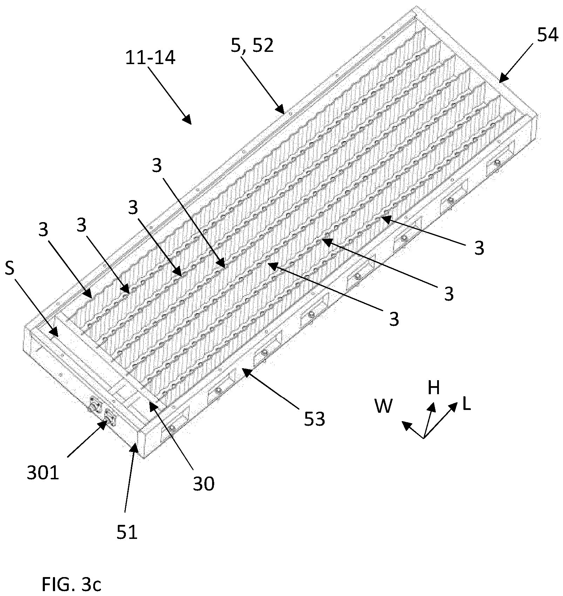

With reference to e.g. FIGS. 3a and 3c, it is depicted that at least one battery layer 11-14 of the at least two adjacent battery layers may further comprise at least one cooling member 3 with a coolant path for coolant, wherein the at least one cooling member 3 extends in the longitudinal direction L and is provided in-between two adjacent battery cell rows. As shown in the illustrated example, there is preferably one cooling member 3 provided in-between at least every two adjacent battery cell rows of battery cells 2. The at least one cooling member 3 may as further shown be a cooling member with a repeated wave shape extending in the longitudinal direction L. The cooling member 3 may in some examples be denoted a snake cooling member.

With reference to e.g. FIG. 3a, at least one battery layer of the at least two adjacent battery layers may further comprise a cooling manifold 30 fluidly connected to the at least one cooling member 3, wherein the cooling manifold 30 is provided in the side space S between the first outer end 21 of the battery cell rows and the first side wall 51. For example, as shown, the cooling manifold 30 may be provided in the side space S such that the cooling manifold 30 is closer to the first outer end 21 of the battery cell rows than to the first side wall 51. The cooling manifold 30 may as shown abut on the battery cells 2. The cooling manifold is configured to distribute coolant to/from the at least one cooling member 3.

Coolant conduits 301 for fluidly connecting the cooling manifold 30 to a coolant source (not shown) may be fluidly connected to the cooling manifold 30. In the shown example, the coolant conduits 301 extend in the side space S and through the frame arrangement 5 to an outside thereof. Accordingly, the battery pack 1 may comprise at least one elongated media for providing a fluid connection with at least one battery layer.

With reference to e.g. FIG. 3b, the base plate member 4 may comprise an integrated venting conduit 42 with at least one first venting opening 421 on the support surface 41 for at least one battery cell 2 and with at least one second venting opening 422 which is provided at the side space S. In the shown example, there is one first venting opening 421 for each battery cell 2. The battery cells 2 may thus comprise a corresponding venting opening on its underside (not shown).

FIG. 3a further shows that, for each battery layer of the at least two adjacent battery layers, the frame arrangement 5 may comprise a second side wall 54 which is provided on an opposite side of the frame arrangement 5 with respect to the first side wall 51. The second side wall 54 may define the second outer end 22 of the battery cell rows. Hence, in this example, the battery cells 2 at the second outer end abut on the second side wall 54.

Additionally, or alternatively, as also shown in FIG. 3a, for each battery layer of the at least two adjacent battery layers, the frame arrangement 5 may comprise a first longitudinally extending wall 52 and a second longitudinally extending wall 53 which are offset from each other in the width direction W, and which mechanically connects the first and second side walls 51, 54 to each other. The first and second longitudinally extending walls 52, 53 may define outer lateral ends of the outermost battery cell rows. Hence, in this example, the battery cells 2 at the outer lateral ends abut on the first and second longitudinally extending walls 52, 53.

With reference to e.g. FIG. 3a, for at least one battery layer of the at least two adjacent battery layers, the first side wall 51 of the frame arrangement 5 may as shown comprise a removably attached lid 511 for closing and giving access to the side space S. For example, FIG. 3b shows an example when the lid 511 is removed, thereby giving access to the side space S.

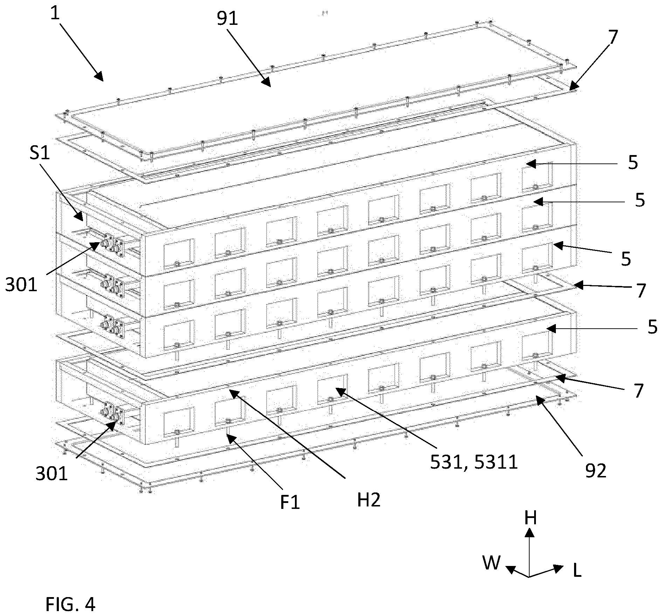

**FIG. 4** is an exemplary battery pack 1 in a perspective and exploded view according to an example. The battery pack 1 in FIG. 4 may for example comprise the battery layers 11-14 as shown in FIGS. 3a-c.

FIG. 4 depicts that the at least two adjacent battery layers of the plurality of battery layers 11-14 are configured such that the side spaces S together form a common open side space S1 which extends in the height direction H between the battery layers 11-14. In this example, the common open side space S1 is formed by the side spaces S of four adjacently arranged battery layers 11-14. It shall however be noted that the common open side space S1 as disclosed herein may be formed by any number of adjacently arranged battery layers.

With reference to e.g. FIGS. 3a-c and FIG. 4, it is depicted that the battery pack 1 is preferably configured such that the at least two adjacent battery layers 11-14 are mechanically connected to each other via the frame arrangements 5 of the two adjacent battery layers 11-14. For example, the frame arrangements 5 of the at least two adjacent battery layers 11-14 may be mechanically connected to each other by one or more fasteners F1. In these examples, the one or more fasteners are screws. Other fasteners are also conceivable, such as bolts or rivets. As shown, the fasteners F1 may have a longitudinal extension which extends along the height direction H.

At least one fastener, such as each fastener, of the one or more fasteners F1 may as shown be provided in complementary holes H1, H2 of the frame arrangements 5 of the at least two adjacent battery layers 11-14, wherein one of the complementary holes H1 in one of the frame arrangements has a fastener opening H11 which is accessible from a side face 531 of the frame arrangement 5 which is directed away from the frame arrangement 5 in the width direction W or the longitudinal direction L. Preferably, as shown, there are a plurality of complementary holes H1, H2 of the frame arrangements 5 of the at least two adjacent battery layers 11-14.

For example, the fastener opening H11 may as shown be provided in a recess 5311 on the side face 531. Accordingly, by way of example, the recess 5311 and the fastener opening H11 may be configured such that a fastener F1 can be inserted into the fastener opening H11 in a direction along the height direction H. Thereby, a compact configuration may be achieved, e.g., by avoiding the need of any protruding flanges or the like around the frame arrangement 5. As depicted, there may be a plurality of recesses 5311 provided on the side face 531 with a respective fastener opening H11.

FIG. 4 depicts that, for the at least two adjacent battery layers 11-14, a sealing gasket 7 may be provided between the frame arrangements 5 such that a fluid tight connection is provided in the connection between the frame arrangements 5. Accordingly, by way of example, a sealing gasket 7 may be provided in-between each two adjacent frame arrangements 5.

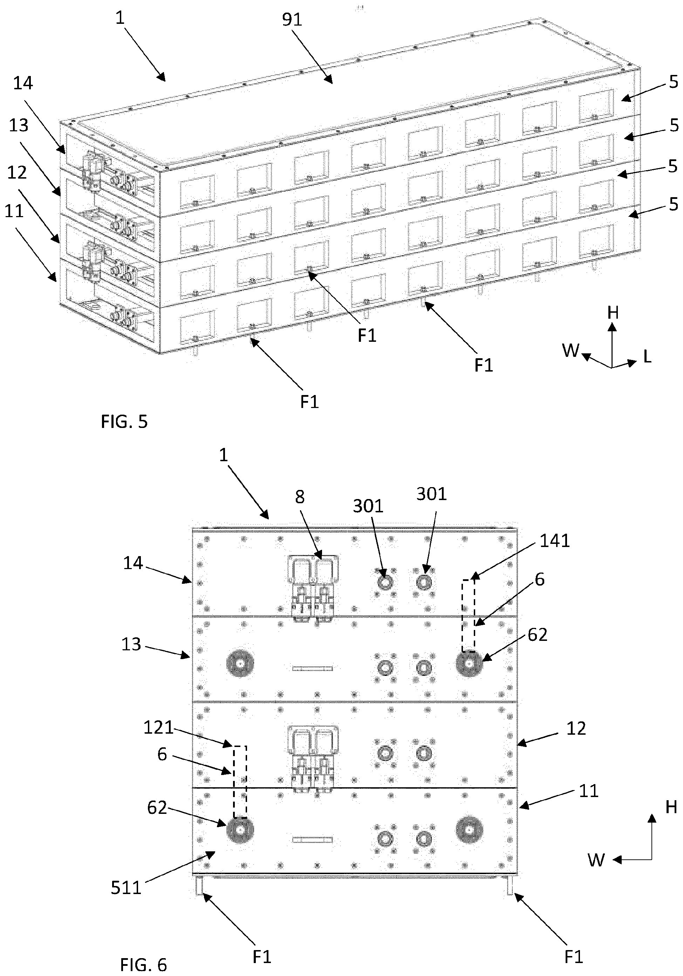

**FIG. 5** is an exemplary battery pack 1 in a perspective view according to an example. **FIG. 6** is an exemplary battery pack 1 in a front side view according to an example. The battery pack 1 in FIG. 5 and FIG. 6 may for example be the battery pack 1 as shown in FIG. 2 and/or FIG. 4. The battery pack 1 in FIG. 5 and FIG. 6 may additionally or alternatively comprise the battery layers as shown in FIGS. 3a-c.

With reference to e.g. FIG. 5 and FIG. 6, the battery pack 1 may further comprise at least one elongated media 6, 301, 8 for providing a fluid or electric connection with at least one battery layer 11-14.

As shown, the at least one elongated media may be any one of one or more electric cables 8, one or more coolant conduits 301, or one or more venting conduits 6. Additionally, or alternatively, the at least one elongated media may be one or more data communication cables (not shown).

In the shown example, the at least one elongated media 6 is provided in the common open side space S1, and the at least one elongated media 6 extends in the common open side space S1 between the side spaces S of the at least two adjacent battery layers 11-12 and 13-14 (illustrated by dotted boxes in FIG. 6). Any one of the herein disclosed elongated media may extend in this manner.

The at least one elongated media 6 may be mechanically connected to a portion 141; 121 of one of the battery layers 14; 12 such that a fluid or electric connection of the at least one elongated media 6 is achieved with the battery layer (e.g. in this example a fluid connection with the at least one second venting opening 422), and the at least one elongated media 6 may be routed such that it extends out through an opening 62 of the battery pack 1 which is provided in another battery layer 13; 11. In this example, the opening 62 is a venting opening fluidly connected to the at least one second venting opening 422 on the base plate 4 of another battery layer. It shall however be noted that this type of configuration of routing the elongated media in the common open side space S1 is also applicable for any other elongated media as disclosed herein.

The battery pack 1 as disclosed herein may as shown in FIG. 4 also comprise a top cover 91 and a bottom cover 92. The top and bottom covers 91, 92 may also be mechanically connected to the frame arrangements 5, such as by use of fasteners F1, wherein the fasteners F1 may as shown have a longitudinal extension along the height direction H. A sealing gasket 7 may be provided to seal between the top cover 91 and the adjacent frame arrangement 5 and/or a sealing gasket 7 may be provided to seal between the bottom cover 92 and the adjacent frame arrangement 5.

In the following, possible features and feature combinations of the present disclosure are presented as a list of Examples.

Example 1: A battery pack (1), the battery pack (1) having a longitudinal extension in a longitudinal direction (L), a width extension in a width direction (W) and a height extension in a height direction (H), wherein the battery pack (1) comprises a plurality of battery layers (11-14) arranged on top of each other in the height direction (H), and wherein each battery layer (11-14) of at least two adjacent battery layers of the plurality of battery layers (11-14) comprises:
- a plurality of battery cells (2) arranged in battery cell rows which extend in the longitudinal direction (L) from a first outer end (21) of the battery cell rows to a second outer end (22) of the battery cell rows,
- a base plate member (4) with a support surface (41) facing upwardly in the height direction (H), wherein the plurality of battery cells (2) is supported by the support surface (41),
- a frame arrangement (5) mechanically connected to the base plate member (4), wherein the frame arrangement (5) encloses the plurality of battery cells (2), as seen in a sectional plane which is perpendicular to the height direction (H), and wherein the frame arrangement (5) and the battery cell rows are adapted such that a side space (S) is formed which extends in the longitudinal direction (L) from the first outer end (21) of the battery cell rows to a first side wall (51) of the frame arrangement (5), and
wherein the at least two adjacent battery layers of the plurality of battery layers (11-14) are configured such that the side spaces (S) together form a common open side space (S 1) which extends in the height direction (H) between the battery layers (11-14).

Example 2: The battery pack (1) according to Example 1, wherein the plurality of battery cells are cylindrical battery cells.

Example 3: The battery pack (1) according to Example 1 or 2, wherein, for each battery layer (11-14) of the at least two adjacent battery layers, the side space (S) further extends in the width direction (W) between a first longitudinally extending wall (52) and a second longitudinally extending wall (53) of the frame arrangement (5).

Example 4: The battery pack (1) according to any one of the preceding Examples, wherein at least one battery layer (11-14) of the at least two adjacent battery layers further comprises at least one cooling member (3) with a coolant path for coolant, wherein the at least one cooling member (3) extends in the longitudinal direction (L) and is provided in-between two adjacent battery cell rows.

Example 5: The battery pack (1) according to Example 4, wherein at least one battery layer of the at least two adjacent battery layers further comprises a cooling manifold (30) fluidly connected to the at least one cooling member (3), wherein the cooling manifold (30) is provided in the side space (S) between the first outer end (21) of the battery cell rows and the first side wall (51).

Example 6: The battery pack (1) according to Example 5, wherein the cooling manifold (30) is provided in the side space (S) such that the cooling manifold (30) is closer to the first outer end (21) of the battery cell rows than to the first side wall (51).

Example 7: The battery pack (1) according to any one of Examples 4-6, wherein the at least one cooling member (3) is a cooling member with a repeated wave shape extending in the longitudinal direction (L).

Example 8: The battery pack (1) according to any one of the preceding Examples, further comprising at least one elongated media (6) for providing a fluid or electric connection with at least one battery layer, wherein the at least one elongated media (6) is provided in the common open side space (S1), and wherein the at least one elongated media (6) extends in the common open side space (S 1) between the side spaces (S) of the at least two adjacent battery layers (11-12; 13-14).

Example 9: The battery pack (1) according to Example 8, wherein the at least one elongated media is any one of one or more electric cables, one or more data communication cables, one or more coolant conduits, or one or more venting conduits (6).

Example 10: The battery pack (1) according to any one of Examples 8-9, wherein the at least one elongated media (6) is mechanically connected to a portion (141; 121) of one of the battery layers (14; 12) such that a fluid or electric connection of the at least one elongated media (6) is achieved with the battery layer, and wherein the at least one elongated media (6) is routed such that it extends out through an opening (62) of the battery pack (1) which is provided in another battery layer (13; 11).

Example 11: The battery pack (1) according to any one of the preceding Examples, wherein, for at least one battery layer of the at least two adjacent battery layers, the first side wall (51) of the frame arrangement (5) comprises a removably attached lid (511) for closing and giving access to the side space (S).

Example 12: The battery pack (1) according to any one of the preceding Examples, wherein the battery pack (1) is configured such that the at least two adjacent battery layers are mechanically connected to each other via the frame arrangements (5) of the two adjacent battery layers.

Example 13: The battery pack (1) according to Example 12, wherein the frame arrangements (5) of the at least two adjacent battery layers (11-14) are mechanically connected to each other by one or more fasteners (F1).

Example 14: The battery pack (1) according to Example 13, wherein at least one fastener of the one or more fasteners (F1) is provided in complementary holes (H1, H2) of the frame arrangements (5) of the at least two adjacent battery layers, wherein one of the complementary holes (H1) in one of the frame arrangements has a fastener opening (H11) which is accessible from a side face (531) of the frame arrangement (5) which is directed away from the frame arrangement (5) in the width direction (W) or the longitudinal direction (L).

Example 15: The battery pack (1) according to Example 14, wherein the fastener opening (H11) is provided in a recess (5311) on the side face (531).

Example 16: The battery pack (1) according to any one of the preceding Examples, wherein the base plate member (4) comprises an integrated venting conduit (42) with at least one first venting opening (421) on the support surface (41) for at least one battery cell (2) and with at least one second venting opening (422) which is provided at the side space (S).

Example 17: The battery pack (1) according to any one of the preceding Examples, wherein the plurality of battery cells (2) are oriented such that electrical terminals (23) thereof are facing upwardly in the height direction (H).

Example 18: The battery pack (1) according to any one of the preceding Examples, wherein, for each battery layer of the at least two adjacent battery layers, the frame arrangement (5) comprises a second side wall (54) which is provided on an opposite side of the frame arrangement (5) with respect to the first side wall (51), wherein the second side wall (54) defines the second outer end (22) of the battery cell rows.

Example 19: The battery pack (1) according to Example 18, wherein, for each battery layer of the at least two adjacent battery layers, the frame arrangement (5) comprises a first longitudinally extending wall (52) and a second longitudinally extending wall (53) which are offset from each other in the width direction (W), and which mechanically connects the first and second side walls (51, 54) to each other, wherein the first and second longitudinally extending walls (52, 53) define outer lateral ends of the outermost battery cell rows.

Example 20: The battery pack (1) according to any one of the preceding Examples, wherein, for the at least two adjacent battery layers, a sealing gasket (7) is provided between the frame arrangements (5) such that a fluid tight connection is provided in the connection between the frame arrangements.

Example 21: A vehicle (100) comprising the battery pack (1) according to any one of the preceding Examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery pack (1), the battery pack (1) having a longitudinal extension in a longitudinal direction (L), a width extension in a width direction (W) and a height extension in a height direction (H), wherein the battery pack (1) comprises a plurality of battery layers (11-14) arranged on top of each other in the height direction (H), and wherein each battery layer (11-14) of at least two adjacent battery layers of the plurality of battery layers (11-14) comprises:
- a plurality of battery cells (2) arranged in battery cell rows which extend in the longitudinal direction (L) from a first outer end (21) of the battery cell rows to a second outer end (22) of the battery cell rows,
- a base plate member (4) with a support surface (41) facing upwardly in the height direction (H), wherein the plurality of battery cells (2) is supported by the support surface (41),
- a frame arrangement (5) mechanically connected to the base plate member (4), wherein the frame arrangement (5) encloses the plurality of battery cells (2), as seen in a sectional plane which is perpendicular to the height direction (H), and wherein the frame arrangement (5) and the battery cell rows are adapted such that a side space (S) is formed which extends in the longitudinal direction (L) from the first outer end (21) of the battery cell rows to a first side wall (51) of the frame arrangement (5), and
wherein the at least two adjacent battery layers of the plurality of battery layers (11-14) are configured such that the side spaces (S) together form a common open side space (S1) which extends in the height direction (H) between the battery layers (11-14).

2. The battery pack (1) according to claim 1, wherein the plurality of battery cells are cylindrical battery cells.

3. The battery pack (1) according to claim 1 or 2, wherein, for each battery layer (11-14) of the at least two adjacent battery layers, the side space (S) further extends in the width direction (W) between a first longitudinally extending wall (52) and a second longitudinally extending wall (53) of the frame arrangement (5).

4. The battery pack (1) according to any one of the preceding claims, wherein at least one battery layer (11-14) of the at least two adjacent battery layers further comprises at least one cooling member (3) with a coolant path for coolant, wherein the at least one cooling member (3) extends in the longitudinal direction (L) and is provided in-between two adjacent battery cell rows.

5. The battery pack (1) according to claim 4, wherein at least one battery layer of the at least two adjacent battery layers further comprises a cooling manifold (30) fluidly connected to the at least one cooling member (3), wherein the cooling manifold (30) is provided in the side space (S) between the first outer end (21) of the battery cell rows and the first side wall (51).

6. The battery pack (1) according to any one of the preceding claims, further comprising at least one elongated media (6) for providing a fluid or electric connection with at least one battery layer, wherein the at least one elongated media (6) is provided in the common open side space (S1), and wherein the at least one elongated media (6) extends in the common open side space (S1) between the side spaces (S) of the at least two adjacent battery layers (11-12; 13-14).

7. The battery pack (1) according to claim 6, wherein the at least one elongated media is any one of one or more electric cables, one or more data communication cables, one or more coolant conduits, or one or more venting conduits (6).

8. The battery pack (1) according to any one of claims 6-7, wherein the at least one elongated media (6) is mechanically connected to a portion (141; 121) of one of the battery layers (14; 12) such that a fluid or electric connection of the at least one elongated media (6) is achieved with the battery layer, and wherein the at least one elongated media (6) is routed such that it extends out through an opening (62) of the battery pack (1) which is provided in another battery layer (13; 11).

9. The battery pack (1) according to any one of the preceding claims, wherein the battery pack (1) is configured such that the at least two adjacent battery layers are mechanically connected to each other via the frame arrangements (5) of the two adjacent battery layers.

10. The battery pack (1) according to claim 9, wherein the frame arrangements (5) of the at least two adjacent battery layers (11-14) are mechanically connected to each other by one or more fasteners (F1).

11. The battery pack (1) according to claim 10, wherein at least one fastener of the one or more fasteners (F1) is provided in complementary holes (H1, H2) of the frame arrangements (5) of the at least two adjacent battery layers, wherein one of the complementary holes (H1) in one of the frame arrangements has a fastener opening (H11) which is accessible from a side face (531) of the frame arrangement (5) which is directed away from the frame arrangement (5) in the width direction (W) or the longitudinal direction (L).

12. The battery pack (1) according to claim 11, wherein the fastener opening (H11) is provided in a recess (5311) on the side face (531).

13. The battery pack (1) according to any one of the preceding claims, wherein the base plate member (4) comprises an integrated venting conduit (42) with at least one first venting opening (421) on the support surface (41) for at least one battery cell (2) and with at least one second venting opening (422) which is provided at the side space (S).

14. The battery pack (1) according to any one of the preceding claims, wherein the plurality of battery cells (2) are oriented such that electrical terminals (23) thereof are facing upwardly in the height direction (H).

15. A vehicle (100) comprising the battery pack (1) according to any one of the preceding claims.
